# EUROPÄISCHE PATENTSCHRIFT

(11) **EP 0 377 106 B1**
(45) Veröffentlichungstag und Bekanntmachung des Hinweises auf die Patenterteilung: **01.03.1995**
(21) Anmeldenummer: 89121394.4
(22) Anmeldetag: 18.11.1989
(51) Int. Cl.: C22C 18/00, H01M 4/42

(54) **Alkalische Batterie und Verfahren zur Herstellung von derselbe**
Alkaline battery and process for producing the same
Batterie alcaline et sa procédé de fabrication

(30) Priorität: 07.12.1988 DE 3841068
(43) Veröffentlichungstag der Anmeldung: 11.07.1990
(73) Patentinhaber: GRILLO-WERKE AG, D-47169 Duisburg (DE)
(72) Erfinder: Glaeser, Wolfgang, Dr., D-3380 Goslar 1 (DE)
(74) Vertreter: Werner, Hans-Karsten, Dr.Dipl.-Chem.

(56) Entgegenhaltungen:
- EP-A- 0 123 919
- BE-A- 893 551
- DE-B- 1 086 309
- PATENT ABSTRACTS OF JAPAN vol.10, no. 356 (E-459) (2412), 29. November 1986; & JP-A-61 153949 (MITSUI MINING & SMELTING CO.) 12.07.1986
- PATENT ABSTRACTS OF JAPAN vol.10, no. 356 (E-459)(2412), 29. November 1986; & JP-A-61 153950 (MITSUI MINING & SMELTING CO.) 12.07.1986
- PATENT ABSTRACTS OF JAPAN vol. 10,no. 306 (E.446) (2362), 7. Oktober 1986; & JP-A-61118966 (SANYO ELECTRIC) 06.06.1986

## Beschreibung

Gegenstand der vorliegenden Erfindung ist eine alkalische Batterie ohne Entgasungsmechanismus und ein Verfahren zur Herstellung einer alkalischen Batterie, wobei Zinkpulver mit geringer Gasentwicklung im alkalischen Elektrolyten durch Legieren oder Aufbringen von Metallen in oder auf das Zink verwendet wird.

Für den Einsatz in alkalischen Batterien ist Zinkpulver nur dann geeignet, wenn es ausreichend wenig Wasserstoff-/Gasentwicklung im Elektrolyten auch ohne Stromabgabe zeigt. Zu diesem Zweck wird Zinkpulver im allgemeinen mit Blei und Quecksilber passiviert. Die Quecksilber-Passivierung kann entweder als sogenannte nachträgliche Amalgamierung nach der Pulverherstellung erfolgen oder durch Pulverisierung von Zinkamalgamen.

Da Quecksilber aus Umweltschutzgründen in Batterien vermieden werden sollte, sind bereits viele Versuche unternommen worden, durch Zusatz anderer Metalle den Gehalt an Quecksilber zu senken oder sogar den Zusatz von Quecksilber ganz zu vermeiden. Es wird diesbezüglich auf die EP-A-0 123 919 verwiesen. Alle herkömmlichen Zinkpulver für alkalische Batterien, insbesondere wenn sie quecksilberarm oder quecksilberfrei sind, enthielten beträchtliche Mengen Blei. Diese Bleimengen waren entweder schon im Ausgangsmaterial vorhanden, zum Beispiel wenn sogenanntes Hüttenzink zum Einsatz gekommen ist, oder das Blei wurde später als Legierungskomponente dem reinen Zink zugesetzt. Die zugesetzten Bleimengen liegen im allgemeinen zwischen 0,03 und 3 Gew.-%. 0,05 Gew.-% Blei, entsprechend 500 ppm Blei, sind beispielsweise in der Lage, die Gasung von reinem Zink von 1,2 ml/25 g in 24 Stunden bei 70°C auf 0,10 ml Gas zu senken. Auch die Beispiele der schon erwähnten EP-A-0 123 919 zeigen Bleigehalte zwischen 0,05 und 2,7 Gew.-%.

Die JP-A-61-153949 beschreibt alkalische Batterien, die aus einer Zinklegierung, die Indium, Silber, Gallium und Tellur enthalten, gefertigt wird. Diese Legierungen können quecksilberfrei sein.

Die JP-A-61-153950 beschreibt eine Batterie mit einer Indium und Calcium enthaltenden Zinklegierung. Auch diese Legierung kann quecksilberfrei sein.

In der Zwischenzeit wird auch der Toxizität und Umweltschädlichkeit von Blei mehr Bedeutung zugemessen, so daß das Bedürfnis besteht, den Bleigehalt von alkalischen Batterien zu senken. Dabei ist zu beachten, daß auch reines Zink je nach Herstellungsverfahren noch gewisse Restbleimengen enthält, die jedoch stets unter 30 ppm, teilweise auch unter 20 ppm oder sogar unter 10 ppm liegen.

Es wurde jetzt überraschenderweise gefunden, daß es möglich ist, Batterien ohne Entgasungsmechanismus herzustellen, in der ein Zinkpulver mit einem Restbleigehalt unter 30 ppm mit 10 bis 10000 ppm, vorzugsweise 100 bis 1000 ppm Indium und zusätzlich 10 bis 10000 ppm, vorzugsweise 100 bis 1000 ppm Wismut sowie Rest Zink verwendet wird.

Zur weiteren Optimierung kann dieses Zinkpulver noch einen Galliumgehalt von 0 bis 1000 ppm sowie einen Gehalt an Alkali- und/oder Erdalkalimetallen bis zu 1000 ppm aufweisen.

In einer weiteren bevorzugten Ausgestaltung des erfindungsgemäß verwendeten Zinkpulvers enthält dieses bekannte Zink-Korrosionsinhibitoren. Dazu zählen unter anderem die folgenden Verbindungen: Terephthalsäure, Biphenylcarboxylsäure, Bisphenylcarbonitril, Malachitgrün, Benzotriazol, p-Aminobenzoesäure, Pyridinylessigsäure, Oxamid, Dimethylformamid, Ethanol, aromatische Amine wie Mono-, Di- und Tribenzylamin, sulfonierte Benzylamine, N-Decylpyridiniumchlorid, 2,6-Di(pyridin-N-methyl)4-methylphenoldichlorid, Dimethylolharnstoff, Ethylenglycol, Diethylenglycol, Triethylenglycol, oberflächenaktive Stoffe wie Polyoxyethylenalkylamin, Polyoxyethylenalkylether und Polyoxyethylenalkylphenylether. Allerdings ist zu beachten, daß einige der vorstehend genannten Substanzen auch je nach Konzentration aktivierend wirken können. Als weitere Mittel zur Inhibierung der Korrosion des Zinks kommen Zusätze von Zinkoxid und Tetrabutylammoniumhydroxid oder Zinkoxid, Tetraethylammoniumbromid und Tetrapropylammoniumhydroxid in Frage. Weiterhin kann durch Zusätze von Kaliumsilicat das Zink vor Korrosion geschützt werden.

Besonders gute Ergebnisse werden erzielt, wenn der Gehalt an Wismut kleiner oder gleich ist dem Gehalt an Indium. Vorzugsweise liegt der Gehalt an Wismut und Indium im Bereich 1:3 bis 1:1.

Die Hersttellung des in der erfindungsgemäßen Batterie verwendeten Zinkpulvers erfolgt beispielsweise dadurch, daß man Zink mit den gewünschten Mengen an Zusätzen legiert und die geschmolzene Legierung in an sich bekannter Weise zerstäubt. Es ist aber auch möglich, ein Zinkpulver, das keines oder nur einigi der Legierungszusätze enthält, nachträglich mit wäßrigen Lösungen der noch zusätzlich gewünschten Bestandteile zu behandeln, zu waschen und zu trocknen. Ein bevorzugtes Verfahren besteht darin, daß man die geschmolzene Legierung mit einem Gemisch aus Gas und Wasser verdüst, wobei die Wassermenge so bemessen ist, daß sie aufgrund des Wärmeinhalts der Pulverteilchen restlos verdampft.

Eine weitere Methode zur Zerstäubung der Legierung besteht darin, daß man die Schmelze der Legierung granuliert, zu Pulver vermählt und gewünschtenfalls die Anteile an Feinkorn und Grobkorn durch Sieben entfernt. Bevorzugte Teilchengrößen für Zinkpulver in alkalischen Batterien liegen zwischen 70 und 600 »m. Handelsprodukte weisen oft Kornverteilungen zwischen 75 und 500 »m auf.

Die erwähnten Korrosionsinhibitoren können in an sich bekannter Weise in das erfindungsgemäße Zinkpulver eingearbeitet werden. Im einfachsten Fall werden die Substanzen in Form ihrer Lösung mit dem Zinkpulver in Kontakt gebracht. Bei einer sich anschließenden Trocknung bleiben dann die Korrosionsinhibitoren auf dem Zinkpulver zurück. Andererseits ist es auch denkbar, daß die Inhibitoren dem Batterie-Elektrolyten zugesetzt werden.

Die Gasentwicklung wird im allgemeinen in einem alkalischen Elektrolyten gemessen, der durch Auflösen von 400 g KOH und 40 g ZnO und Auffüllen auf 1000 ml mit Wasser hergestellt wird. Die Gasentwicklung wurde in Duran-Glaskolben mit 100 ml Elektrolyt-Fassungsvermögen bestimmt. Es wurden jeweils 25 g Zinkpulver eingewogen und die Gasmenge nach 24 Stunden bzw. 48 Stunden gemessen.

In den nachfolgenden Beispielen sind einige typische Zusammensetzungen des erfindungsgemäßen Zinkpulvers und die von ihnen entwickelten Gasmengen beschrieben.

### Beispiel 1

Ein Feinzink mit einem Restbleigehalt unter 20 ppm wurde mit 0,08 Gew.-% Indium und 0,08 Gew.-% Wismut legiert und in bekannter Weise zerstäubt. Durch Sieben wurde die Fraktion zwischen 75 und 500 »m abgetrennt und näher untersucht. 25 g dieses Zinkpulvers lieferten bei 70°C in 24 Stunden 0,02 ml Gas und in 48 Stunden 0,16 ml Gas.

### Beispiel 2

Das gleiche Feinzink wie in Beispiel 1 wurde mit 0,032 Gew.-% Indium und 0,023 Gew.-% Wismut legiert und zu Pulver verarbeitet. Die Fraktion zwischen 75 und 500 gm lieferte unter den gleichen Bedingungen wie in Beispiel 1 in 24 Stunden 0,12 ml und in 48 Stunden 0,22 ml Gas.

### Beispiel 3

Das gleiche Feinzink wie in Beispiel 1 wurde mit 0,03 Gew.-% Indium und 0,06 Gew.-% Wismut legiert und zu Pulver verarbeitet. Dieses Pulver lieferte unter den gleichen Bedingungen wie in Beispiel 1 in 24 Stunden 0,32 ml und in 48 Stunden 0,72 ml Gas.

### Beispiel 4

Das gleiche Feinzink wie in Beispiel 1 wurde mit 0,01 Gew.-% Indium, 0,01 Gew.-% Wismut und 0,01 Gew.-% Barium legiert und zu Pulver verarbeitet. Dieses Pulver lieferte unter den gleichen Bedingungen wie in Beispiel 1 in 24 Stunden 0,27 ml und in 48 Stunden 0,64 ml Gas.

### vergleichsversuch

Das gleiche Feinzink ohne Legierungszusätze lieferte, unter gleichen Bedingungen zu Pulver verarbeitet, in 24 Stunden 1,2 ml Gas.

Das gleiche Feinzink, mit 0,05 Gew.-% Blei legiert, entwickelte unter gleichen Bedingungen wie in Beispiel 1 innerhalb von 24 Stunden 0,10 ml Gas.

## Patentansprüche

1. Alkalische Batterie ohne Entgasungsmechanismus, in der ein Zinkpulver enthaltend 10 bis 10.000 ppm Indium, 0 bis 1.000 ppm Gallium, bis zu 1.000 ppm Alkali- und/oder Erdalkalimetalle, 10 bis 10.000 ppm Wismut, nur weniger als 30 ppm Blei und Rest Zink verwendet wird.

2. Alkalische Batterie nach Anspruch 1, dadurch gekennzeichnet, daß Zinkpulver enthaltend 100 bis 1.000 ppm Indium verwendet wird.

3. Alkalische Batterie nach Anspruch 1 oder 2, dadurch gekennzeichnet, daß Zinkpulver enthaltend 100 bis 1.000 ppm Wismut verwendet wird.

4. Alkalische Batterie gemäß Ansprüchen 1 bis 3, dadurch gekennzeichnet, daß der Gehalt an Wismut kleiner oder gleich ist dem Gehalt an Indium.

5. Alkalische Batterie gemäß Ansprüchen 1 bis 4, dadurch gekennzeichnet, daß der Gehalt an Wismut und Indium im Bereich 1:3 bis 1:1 liegt.

6. Verfahren zur Herstellung von alkalischen Batterien gemäß Ansprüchen 1 bis 5, wobei man entweder Zink zusätzlich mit 10 bis 10.000 ppm Wismut legiert und die geschmolzene Legierung zerstäubt oder ein Zinkpulver, das keines oder nur einige der Legierungszusätze enthält, nachträglich mit wäßrigen Lösungen der noch zusätzlich gewünschten Bestandteile behandelt, wäscht und trocknet.

7. Verfahren gemäß Anspruch 6, dadurch gekennzeichnet, daß das Zink mit 100 bis 1.000 ppm Wismut legiert ist.

8. Verfahren gemäß Ansprüchen 6 oder 7, dadurch gekennzeichnet, daß man die geschmolzene Legierung mit einem Gemisch aus Gas und Wasser verdüst, wobei die Wassermenge so bemessen ist, daß sie aufgrund des Wärmeinhalts der Pulverteilchen restlos verdampft.

## Claims

1. An alkaline battery without degassing mechanism, wherein a zinc powder is used, which zinc powder contains from 10 to 10,000 ppm of indium, from 0 to 1,000 ppm of gallium, up to 1,000 ppm of alkali and/or alkaline earth metals, from 10 to 10,000 ppm of bismuth, only less than 30 ppm of lead, and zinc as the balance.

2. The alkaline battery according to claim 1, characterized in that a zinc powder containing from 100 to 1,000 ppm of indium is used.

3. The alkaline battery according to claims 1 or 2, characterized in that a zinc powder containing from 100 to 1,000 ppm of bismuth is used.

4. The alkaline battery according to claims 1 to 3, characterized in that the bismuth content is less than or equal to the indium content.

5. The alkaline battery according to claims 1 to 4, characterized in that the bismuth and indium contents are within the range of from 1:3 to 1:1.

6. A process for preparing alkaline batteries according to claims 1 to 5, wherein either the zinc is additionally alloyed with from 10 to 10,000 ppm of bismuth and the molten alloy is atomized, or a zinc powder containing no or just a few of the alloying additives is subsequently treated with aqueous solutions of the components as additionally desired, and then the obtained product is washed and dried.

7. The process according to claim 6, characterized in that the zinc is additionally alloyed with from 100 to 1,000 ppm of bismuth.

8. The process according to claims 6 or 7, characterized in that the molten alloy is atomized by means of a mixture of gas and water, the amount of water having been selected so that it is completely evaporated due to the heat content of the powder particles.

## Revendications

1. Batterie alcaline sans dispositif de dégazage, dans laquelle on utilise une poudre de Zinc contenant 10 à 10 000 ppm d'Indium, 0 à 1 000 ppm de Gallium, jusqu'à 10 000 ppm de métaux alcalins ou alcalino-terreux, 10 à 10 000 ppm de Bismuth, et moins de 30 ppm de Plomb, le reste étant du Zinc.

2. Batterie alcaline selon la revendication 1, caractérisée en ce qu'on utilise une poudre de Zinc contenant 100 à 1 000 ppm d'Indium.

3. Batterie alcaline selon les revendications 1 ou 2, caractérisée en ce qu'on utilise une poudre de Zinc contenant 100 à 1 000 ppm de Bismuth.

4. Batterie alcaline selon l'une des revendications 1 à 3, caractérisée en ce que la teneur en Bismuth est inférieure ou égale à la teneur en Indium.

5. Batterie alcaline selon l'une des revendications 1 à 4, caractérisée en ce que les teneurs en Bismuth et Indium sont dans un rapport 1/3 à 1/1.

6. Procédé d'obtention de batteries alcalines selon les revendications 1 à 5, selon lequel on réalise un alliage de Zinc avec 10 à 10 000 ppm de Bismuth, et on pulvérise l'alliage fondu, ou bien on traite une poudre de Zinc qui ne contient pas d'éléments d'alliage ou seulement quelques-uns d'entre eux, avec des solutions des composants qui sont encore désirés en supplément, on la lave et on la sèche.

7. Procédé selon la revendication 6, caractérisé en ce qu'on réalise un alliage de Zinc avec 100 à 1 000 ppm de Bismuth.

8. Procédé selon la revendication 6 ou 7, caractérisé en ce qu'on atomise l'alliage fondu avec un mélange de gaz et d'eau, la quantité d'eau étant dosée pour qu'elle soit entièrement vaporisée par la chaleur latente des particules de poudre.
